# EUROPEAN PATENT APPLICATION

(11) **EP 3 726 946 A1**
(43) Date of publication of application: **21.10.2020**
(21) Application number: 18888724.4
(22) Date of filing: 21.06.2018
(51) Int. Cl.: H05K 5/02

(54) **CHARGING PILE**

(30) Priority: 12.12.2017 CN 201721723176 U
(71) Applicant: Nio Nextev Limited, Hong Kong (CN)
(72) Inventor: XIA, Lijian, Hong Kong (CN); HAO, Tianlei, Hong Kong (CN); SUN, Chuangcheng, Hong Kong (CN)
(74) Representative: Gille Hrabal
(86) International application number: PCT/CN2018/092082
(87) International publication number: WO 2019/114229

(57) **Abstract**

Disclosed is a charging pile (300) equipped with protection structures, which is provided with a main functional portion and an auxiliary functional portion. The main functional portion and the auxiliary functional portion are respectively sealed by the respective protection structures (100, 200). The protection structures (100, 200) are each composed of sealing grooves, sealing ribs, and seals cooperating with one another. The hierarchical protection of the charging pile distinguishes the key portion and the auxiliary functional portion, so as to ensure that the protection of the main functional portion is not affected by the dismounting of the auxiliary functional portion. The multi-protection design of the charging pile body can effectively prevent the infiltration of rainwater, and sand and dust blown by the wind, thereby ensuring the reliable operation and stable working of the product and devices.

## Description

### Technical Field

The invention relates to the field of charging piles, and in particular to a charging pile equipped with protection structures for a hierarchical protection and multiple protections.

### Background Art

With the development and expansion of the new energy vehicle industry, the charging pile industry has been greatly developed. Charging piles are installed in public buildings (public premises, shopping malls, public parking lots, etc.) and residential parking lots or charging stations, most of the application scenarios are outdoor, and the charging piles are exposed to rainwater and fine sand or dust flying up in the air, so that the IP protection requirements of the charging piles are getting higher and higher.

In addition, the current sealing protection solutions of the charging piles basically carry out extensive integral protection on pile bodies without hierarchical design, and a main protection and an auxiliary protection are not separately considered, so that the maintenance and the disassembly of an auxiliary functional portion inevitably influence the sealing protection of the whole charging pile.

### Summary of the Invention

The invention aims to solve the technical problems of how to provide multiple protections to effectively prevent the infiltration of rainwater, and sand and dust blown by the wind so as to ensure reliable and stable operation of components in a charging pile and prolong the service life of the product, and how to provide the hierarchical protection distinguishing the key portion and the auxiliary functional portion so as to ensure that the sealing protection of the main function of a charging pile is not affected by maintenance and disassembly of an auxiliary functional portion.

The invention provides a charging pile to solve the above problems. Specifically, according to an aspect of the invention, provided is
a charging pile, the charging pile being provided with a main functional portion and an auxiliary functional portion, wherein the charging pile is further provided with a main functional portion protection structure and an auxiliary functional portion protection structure which are independent from each other, and the main functional portion and the auxiliary functional portion are independently sealed by the main functional portion protection structure and the auxiliary functional portion protection structure.

Optionally, according to an embodiment of the invention, the main functional portion is provided with a main functional portion first component and a main functional portion second component, the main functional portion protection structure comprises main functional portion sealing grooves which are provided in one of the main functional portion first component and the main functional portion second component and arranged along a periphery thereof, and main functional portion sealing ribs which are provided on the other of the main functional portion first component and the main functional portion second component, arranged along a periphery thereof and correspond to the main functional portion sealing grooves, wherein the main functional portion sealing grooves and the main functional portion sealing ribs cooperatively have a sealing function in the case where the main functional portion first component and the main functional portion second component are connected to each other.

Optionally, according to an embodiment of the invention, main functional portion seals are disposed in the main functional portion sealing grooves, and the main functional portion sealing ribs are abutted and pressed against the main functional portion seals.

Optionally, according to an embodiment of the invention, the main functional portion sealing ribs are pressed against the main functional portion seals via a main functional portion threaded fastener or by means of a snap-fit connection.

Optionally, according to an embodiment of the invention, the auxiliary functional portion is provided with an auxiliary functional portion first component and an auxiliary functional portion second component, the auxiliary functional portion protection structure comprises auxiliary functional portion sealing grooves which are provided in one of the auxiliary functional portion first component and the auxiliary functional portion second component and arranged along a periphery thereof, and auxiliary functional portion sealing ribs which are provided on the other of the auxiliary functional portion first component and the auxiliary functional portion second component, arranged along a periphery thereof and correspond to the auxiliary functional portion sealing grooves, wherein the auxiliary functional portion sealing grooves and the auxiliary functional portion sealing ribs cooperatively have a sealing function in the case where the auxiliary functional portion first component and the auxiliary functional portion second component are connected to each other.

Optionally, according to an embodiment of the invention, auxiliary functional portion seals are disposed in the auxiliary functional portion sealing grooves, and the auxiliary functional portion sealing ribs are abutted and pressed against the auxiliary functional portion seals.

Optionally, according to an embodiment of the invention, the auxiliary functional portion sealing ribs are pressed against the auxiliary functional portion seals via an auxiliary functional portion threaded fastener or by means of a snap-fit connection.

Optionally, according to an embodiment of the invention, the main functional portion first component is an upper shell and the main functional portion second component is a bottom shell.

Optionally, according to an embodiment of the invention, the auxiliary functional portion first component is a light-transmitting plate, and the auxiliary functional portion second component is a front panel.

Optionally, according to an embodiment of the invention, the main functional portion seals and/or the auxiliary functional portion seals are rubber sealing strips or silicone sealing strips.

The provided charging pile has the benefits as follows: the multi-protection design of the charging pile body effectively prevents the infiltration of rainwater, and sand and dust blown by the wind, thereby ensuring the reliable operation and stable working of the product and devices; and the hierarchical protection design of the charging pile distinguishes the key portion and the auxiliary functional portion, so as to ensure that the protection of the main functional portion is not affected by the dismounting position of the auxiliary functional portion, thereby improving the reliability of the product.

### Brief Description of the Drawings

The foregoing and other features of the invention will be apparent with reference to the accompany drawings, in which
Fig. 1 is a structural view of a charging pile;
Fig. 2 is a schematic view of a main functional portion protection structure; and
Fig. 3 is a schematic view of an auxiliary functional portion protection structure.

### Detailed Description of Embodiments

It can be readily understood that according to the technical solutions of the invention, an ordinary person skilled in the art may propose multiple interchangeable structures and implementations without changing the essential spirit of the invention. Therefore, the following specific embodiments and the accompanying drawings are merely exemplary descriptions of the technical solutions of the invention, and should not be construed as the entirety of the invention or construed as limiting the technical solution of the invention.

Directional terms, such as up, down, left, right, front, rear, front side, back side, top, and bottom, which are or may be mentioned in this description, are defined with respect to the structures shown in the accompanying drawings, and are relative concepts, and therefore may correspondingly vary depending on different positions and different conditions in use. Therefore, these or other orientation terms should not be construed as restrictive terms as well.

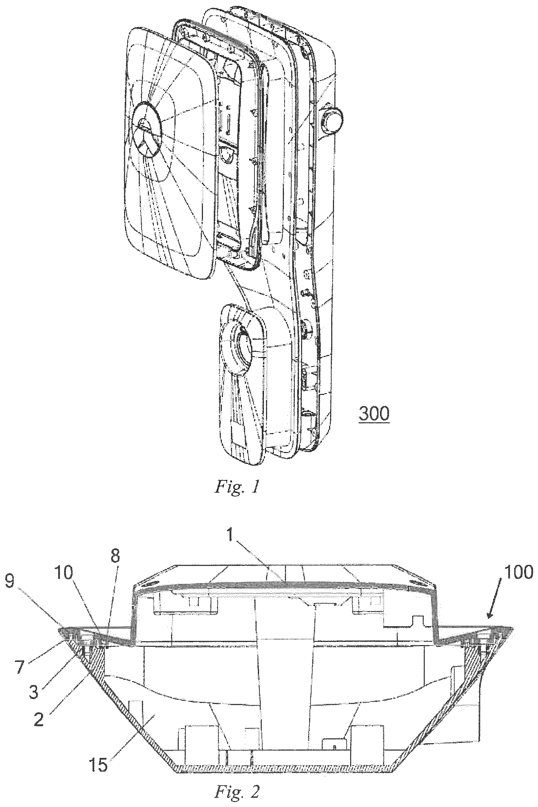

Referring to Figs. 1 and 2, a structural view of a charging pile and a schematic view of a main functional portion protection structure are shown respectively. In the figures, the charging pile is provided with a main functional portion and an auxiliary functional portion. The main functional portion and the auxiliary functional portion are independently sealed by a main functional portion protection structure 100 and an auxiliary functional portion protection structure 200 so as to form a hierarchical protection. It can be seen from Fig. 2 that the main functional portion is provided with a main functional portion first component 1 and a main functional portion second component 2. The main functional portion protection structure 100 is provided with two main functional portion sealing grooves which are provided in the main functional portion first component 1 and arranged along a periphery thereof, and two main functional portion sealing ribs (which can be understood as segments protruding from a component body) which are provided on the main functional portion second component 2, arranged along a periphery thereof and correspond to the two main functional portion sealing grooves. The two main functional portion sealing grooves and the two main functional portion sealing ribs cooperatively have a sealing function when the main functional portion first component 1 and the main functional portion second component 2 are connected to each other.

It should be understood that the main functional portion performs a main function of the charging pile, i.e., a charging function, while the auxiliary functional portion performs auxiliary functions of the charging pile, including, but not limited to, a light assistance function, a vehicle type detection function, a charging process monitoring function, etc.

It should be understood that the main functional portion sealing grooves and the main functional portion sealing ribs may be exchanged in terms of arrangement. That is, the main functional portion sealing grooves are arranged in the main functional portion second component 2, and the main functional portion sealing ribs are arranged on the main functional portion first component 1. In addition, the numbers and positions of the main functional portion sealing grooves and the main functional portion sealing ribs can be determined according to actual conditions. In this embodiment, the main functional portion sealing grooves are presented as a main functional portion first sealing groove 7 and a main functional portion second sealing groove 8 which are sequentially arranged along the periphery. The main functional portion sealing ribs are also correspondingly presented as a main functional portion first sealing rib and a main functional portion second sealing rib and are arranged correspondingly. Considering both the sealing effect and the cost, two grooves and two ribs are relatively suitable.

Furthermore, particularly in the embodiment shown in the figures, the main functional portion first component 1 is an upper shell, and the main functional portion second component 2 is a bottom shell. It should be understood that the main functional portion first component 1 and the main functional portion second component 2 of the invention are not limited to the forms of the upper shell and the bottom shell, and may also be any two shell-type components that need to be connected to each other in the main functional portion.

Optionally, main functional portion seals are respectively arranged in the main functional portion first sealing groove 7 and the main functional portion second sealing groove 8, in order to boost the cooperation of the main functional portion sealing grooves and the main functional portion sealing ribs and to fill the spaces of the main functional portion sealing grooves for avoiding possible gaps. When the main functional portion first component 1 cooperates with the main functional portion second component 2, the main functional portion seals are respectively placed in the main functional portion first sealing groove 7 and the main functional portion second sealing groove 8, and the main functional portion first sealing rib and the main functional portion second sealing rib are abutted and pressed against the main functional portion seals via a main functional portion threaded fastener 3. A closed cavity space 15 is formed in the two sealing structures.

In particular, in the embodiment shown in the figures, the main functional portion seals are presented as a main functional portion first seal 9 and a main functional portion second seal 10. The number of the main functional portion seals matches that of the main functional portion sealing grooves. A person skilled in the art would be able to select any form of seals made of any material, such as rubber sealing strips and silicone sealing strips (e.g. circular), according to practical situations. The silicone sealing strips have the characteristics as follows: a silicone material has good sealing performance, high-temperature resistance, weather resistance, aging resistance, and impact resistance, is waterproof, and can be attached to various materials with smooth surfaces; self-adhesion may be achieved by means of gummed tapes with adhesive backings, and the silicone sealing strips have a better sealing property and also have the characteristics of environmental friendliness, safety, good insulating property, high-temperature resistance, small compression deformation, strong resilience, strong flexibility (compression resistance), no toxicity, etc.; moreover, a longer service life and a flat surface are provided; and finally, the silicone sealing strips have the characteristics of aging resistance and corrosion resistance because silicone itself is very inert.

Furthermore, it can be seen from Fig. 2 that the main functional portion first sealing rib and the main functional portion second sealing rib are jointly pressed against the main functional portion seals via a main functional portion threaded fastener 3. It should be understood that the main functional portion first sealing rib and the main functional portion second sealing rib may also be respectively pressed against the main functional portion seals via main functional portion threaded fasteners 3. The threaded fastening connection is a detachable fixed connection used widely, and has the advantages of simple structure, reliable connection, convenient assembly and disassembly, etc. It includes, but is not limited to, bolted connection, stud connection, screw connection, set screw connection, countersunk screw connection, self-tapping screw connection, wood screw connection, self-tapping locking screw connection, and fastener-counterpart connection (e.g., an external threaded fastener and a washer); and the specific forms of threads may include triangular threads (common or inch-based), cylindrical pipe threads, rectangular threads, etc. In addition, other fastening means may be used by those skilled in the art instead of the main functional portion threaded fastener 3. For example, the main functional portion first sealing rib and the main functional portion second sealing rib may also be respectively pressed against the main functional portion seals by means of a snap-fit connection. Snap-fit is a mechanism for embedded connection or integral locking of one component and another. The snap-fit connection has the biggest characteristic that mounting and dismounting are convenient, tool-free dismounting can be achieved, so that the assembly efficiency is high, the assembly process of snap-fit is also simple, only one insertion action is generally needed, a rotation movement or a product positioning action before assembly is not needed, and the function of simple and quick assembly is provided.

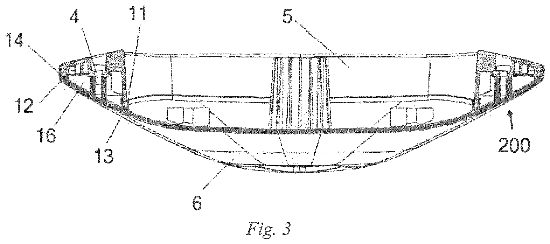

Referring to Fig. 3, a schematic view of an auxiliary functional portion protection structure is illustrated. The auxiliary functional portion is provided with an auxiliary functional portion first component 5 and an auxiliary functional portion second component 6. The auxiliary functional portion protection structure 200 is provided with two auxiliary functional portion sealing grooves which are provided in the auxiliary functional portion second component 6 and arranged along a periphery thereof, and two auxiliary functional portion sealing ribs (which can be understood as segments protruding from a component body) which are provided on the auxiliary functional portion first component 5, arranged along a periphery thereof and correspond to the two auxiliary functional portion sealing grooves. The two auxiliary functional portion sealing grooves and the two auxiliary functional portion sealing ribs jointly have a sealing function when the auxiliary functional portion first component 5 and the auxiliary functional portion second component 6 are connected to each other.

Similarly to the main functional portion, the auxiliary functional portion sealing grooves and the auxiliary functional portion sealing ribs may be exchanged in terms of arrangement. That is, the auxiliary functional portion sealing grooves are arranged in the auxiliary functional portion first component 5, and the auxiliary functional portion sealing ribs are arranged on the auxiliary functional portion second component 6. In addition, the positions and the numbers of the auxiliary functional portion sealing ribs and the auxiliary functional portion sealing grooves can be determined according to actual conditions. In this embodiment, the auxiliary functional portion sealing grooves are presented as an auxiliary functional portion first sealing groove 11 and an auxiliary functional portion second sealing groove 12 which are sequentially arranged along the periphery. The auxiliary functional portion sealing ribs are also correspondingly presented as an auxiliary functional portion first sealing rib and an auxiliary functional portion second sealing rib and are arranged correspondingly. Considering both the sealing effect and the cost, two grooves and two ribs are relatively suitable.

In addition, particularly in the embodiment shown in the figures, the auxiliary functional portion is a light assistance functional portion. Other examples of the auxiliary functional portion have been mentioned above. Accordingly, the auxiliary functional portion first component 5 is a light-transmitting plate, and the auxiliary functional portion second component 6 is a front panel. It should be understood that the auxiliary functional portion first component 5 and the auxiliary functional portion second component 6 of the invention are not limited to the forms of the light-transmitting panel and the front panel, and may be any two shell-type components that need to be connected to each other in the auxiliary functional portion.

Optionally, auxiliary functional portion seals are respectively arranged in the auxiliary functional portion first sealing groove 11 and the auxiliary functional portion second sealing groove 12, in order to boost the cooperation of the auxiliary functional portion sealing grooves and the auxiliary functional portion sealing ribs and to fill the spaces of the auxiliary functional portion sealing grooves for avoiding possible gaps. When the auxiliary functional portion first component 5 cooperates with the auxiliary functional portion second component 6, the auxiliary functional portion seals are respectively placed in the auxiliary functional portion first sealing groove 11 and the auxiliary functional portion second sealing groove 12, and the auxiliary functional portion first sealing rib and the auxiliary functional portion second sealing rib are abutted and pressed against the auxiliary functional portion seals via an auxiliary functional portion threaded fastener 4. A closed cavity space 16 is formed between the two sealing structures.

In particular, in the embodiment shown in the figures, the auxiliary functional portion seals are presented as an auxiliary functional portion first seal 13 and an auxiliary functional portion second seal 14. The number of the auxiliary functional portion seals matches that of the auxiliary functional portion sealing grooves. A person skilled in the art would be able to select any form of seals made of any material, such as rubber sealing strips and silicone sealing strips (e.g. circular), according to practical situations. The characteristics of the silicone material have been mentioned above and will not be described in detail herein.

Furthermore, it can be seen from Fig. 3 that the auxiliary functional portion first sealing rib and the auxiliary functional portion second sealing rib are jointly pressed against the auxiliary functional portion seals via an auxiliary functional portion threaded fastener 4. It should be understood that the auxiliary functional portion first sealing rib and the auxiliary functional portion second sealing rib may also be respectively pressed against the auxiliary functional portion seals via auxiliary functional portion threaded fasteners 4. In addition, other fastening means may be used by those skilled in the art instead of the auxiliary functional portion threaded fastener 4. For example, the auxiliary functional portion first sealing rib and the auxiliary functional portion second sealing rib may also be respectively pressed against the auxiliary functional portion seals by means of a snap-fit connection. The description and features relating to the threaded fastener part and the snap-fit connection have been mentioned above and will not be described in detail herein.

It can be seen therefrom that a hierarchical protection is formed by the protection structure at the main functional portion first component 1 and the main functional portion second component 2 and the protection structure at the auxiliary functional portion first component 5 and the auxiliary functional portion second component 6. Multiple protections are formed by the cooperation of the two main functional portion sealing grooves provided in the main functional portion first component 1 and the two main functional portion sealing ribs arranged on the main functional portion second component 2 (or exchanged in terms of arrangement) and the cooperation of the two auxiliary functional portion sealing grooves provided in the auxiliary functional portion second component 6 and the two auxiliary functional portion sealing ribs arranged on the auxiliary functional portion first component 5 (or exchanged in terms of arrangement).

It should be understood that all of the above preferred embodiments are exemplary rather than limiting, and any modification or variation made by those skilled in the art to the specific embodiments described above without departing from the concept of the invention shall fall within the scope of legal protection of the invention.

## Claims

1. A charging pile (300), the charging pile (300) being provided with a main functional portion and an auxiliary functional portion, **characterized in that** the charging pile (300) is further provided with a main functional portion protection structure (100) and an auxiliary functional portion protection structure (200) which are independent from each other, and the main functional portion and the auxiliary functional portion are independently sealed by the main functional portion protection structure (100) and the auxiliary functional portion protection structure (200).

2. The charging pile (300) according to claim 1, **characterized in that** the main functional portion is provided with a main functional portion first component (1) and a main functional portion second component (2), the main functional portion protection structure (100) comprises main functional portion sealing grooves which are provided in one of the main functional portion first component (1) and the main functional portion second component (2) and arranged along a periphery thereof, and main functional portion sealing ribs which are provided on the other of the main functional portion first component (1) and the main functional portion second component (2), arranged along a periphery thereof and correspond to the main functional portion sealing grooves, wherein the main functional portion sealing grooves and the main functional portion sealing ribs cooperatively have a sealing function in the case where the main functional portion first component (1) and the main functional portion second component (2) are connected to each other.

3. The charging pile (300) according to claim 2, **characterized in that** main functional portion seals are disposed in the main functional portion sealing grooves, and the main functional portion sealing ribs are abutted and pressed against the main functional portion seals.

4. The charging pile (300) according to claim 3, **characterized in that** the main functional portion sealing ribs are pressed against the main functional portion seals via a main functional portion threaded fastener (3) or by means of a snap-fit connection.

5. The charging pile (300) according to any one of claims 1-4, **characterized in that** the auxiliary functional portion is provided with an auxiliary functional portion first component (5) and an auxiliary functional portion second component (6), the auxiliary functional portion protection structure (200) comprises auxiliary functional portion sealing grooves which are provided in one of the auxiliary functional portion first component (5) and the auxiliary functional portion second component (6) and arranged along a periphery thereof, and auxiliary functional portion sealing ribs which are provided on the other of the auxiliary functional portion first component (5) and the auxiliary functional portion second component (6), arranged along a periphery thereof and correspond to the auxiliary functional portion sealing grooves, wherein the auxiliary functional portion sealing grooves and the auxiliary functional portion sealing ribs cooperatively have a sealing function in the case where the auxiliary functional portion first component (5) and the auxiliary functional portion second component (6) are connected to each other.

6. The charging pile (300) according to claim 5, **characterized in that** auxiliary functional portion seals are disposed in the auxiliary functional portion sealing grooves, and the auxiliary functional portion sealing ribs are abutted and pressed against the auxiliary functional portion seals.

7. The charging pile (300) according to claim 6, **characterized in that** the auxiliary functional portion sealing ribs are pressed against the auxiliary functional portion seals via an auxiliary functional portion threaded fastener (4) or by means of a snap-fit connection.

8. The charging pile (300) according to claim 7, **characterized in that** the main functional portion first component (1) is an upper shell and the main functional portion second component (2) is a bottom shell.

9. The charging pile (300) according to claim 8, **characterized in that** the auxiliary functional portion first component (5) is a light-transmitting plate, and the auxiliary functional portion second component (6) is a front panel.

10. The charging pile (300) according to claim 9, **characterized in that** the main functional portion seals and/or the auxiliary functional portion seals are rubber sealing strips or silicone sealing strips.
